# EUROPÄISCHE PATENTSCHRIFT

(11) **EP 3 507 235 B1**
(45) Veröffentlichungstag und Bekanntmachung des Hinweises auf die Patenterteilung: **25.03.2020**
(21) Anmeldenummer: 17727564.1
(22) Anmeldetag: 30.05.2017
(51) Int. Cl.: B67B 3/06, B65B 7/28, B65G 11/14

(54) **SEGMENTIERTER, TELESKOPARTIG VERSTELLBARER KAPPENKANAL**
SEGMENTED TELESCOPICALLY ADJUSTABLE CAP PASSAGE
CONDUIT DE CAPSULES SEGMENTÉ, RÉGLABLE TÉLESCOPIQUEMENT

(30) Priorität: 02.09.2016 DE 102016116437
(43) Veröffentlichungstag der Anmeldung: 10.07.2019
(73) Patentinhaber: KHS GmbH, 44143 Dortmund (DE)
(72) Erfinder: NAABER, Matthias, 55559 Bretzenheim (DE); BRUCH, Bernd, 55595 Weinsheim (DE)
(86) Internationale Anmeldenummer: PCT/EP2017/062991
(87) Internationale Veröffentlichungsnummer: WO 2018/041428

(56) Entgegenhaltungen:
- EP-A1- 0 562 810
- WO-A1-2011/004102
- US-A- 1 434 376

## Beschreibung

Die Erfindung betrifft eine teleskopierbare (teleskopartig verstellbare) Kappenzuführung, mit einem Kappenkanal, der in zumindest einem Abschnitt zwischen einem ausgezogenen und einem zusammengeschobenen Zustand längenverstellbar ist.

Bei üblichen Vorrichtungen des Standes der Technik ist eine Sortieranlage an einem Verschließer bzw. in unmittelbarer Nähe zu einem Verschließer angeordnet und die Kappen werden dem Verschließer über eine starre Führungsschiene zugeführt. Wird der obere, die Verschließelemente tragende Teil des Verschließers in seiner Höhenlage verfahren, um an unterschiedliche Behältergrößen angepasst zu werden, so verfahren die dort angebrachten Aggregate zur Kappensortierung und -ausrichtung mit.

Verstellbare oder teleskopierbare Kappenzuführungen sind in vielfältiger Ausgestaltung aus dem Stand der Technik bekannt. Entsprechende teleskopierbare Kappenzuführungen werden dabei zur Zuführung von Behälter- oder Flaschenverschlüssen, beispielsweise Kronkorken, zu einem Verschließer verwendet, wenn bei sich ändernder Höhe der zu verschließenden Behälter oder Flaschen ein Bewegungsausgleich der Kappenzuführung zum dem an die Höhe des Behälters oder der Flasche angepassten Verschließer notwendig ist, wie sie beispielsweise in der WO 2011/004102 A1 offenbart ist, wobei die Führungsschiene aus zwei zueinander teleskopisch verschiebbaren Abschnitten gebildet ist.

Die bekannten Ausgestaltungen teleskopischer Kappenzuführungen des Standes der Technik haben jedoch mehrere Nachteile. Zum einen können diese Vorrichtungen nur eine relativ geringe Höhendifferenz ausgleichen und sind zugleich nur für den Transport von Kappen über eine relativ geringe Distanz geeignet. Darüber hinaus sind die bekannten Kappenzuführungen lediglich in der teleskopisch verstellbaren Richtung einstellbar und in den übrigen Raumrichtungen starr, wodurch eine sehr genaue räumliche Festlegung des Sortierers und/oder des Kappenförderers zum Verschließer in diesen Raumrichtungen notwendig ist.

Weiterhin machen zunehmend strenge Hygieneanforderungen, insbesondere bei Bier-Abfüllanlagen, einen deutlich größeren Abstand der Sortieranlage vom Verschließer erforderlich. Dies ist beispielsweise eine Auslagerung außerhalb einer Hygieneschutzverkleidung oder eine unabhängige Anordnung der Sortieranlage von dem Verschließer und/oder dem Kappenförderer.

Der Erfindung liegt daher die Aufgabe zu Grunde, eine Kappenzuführung bereitzustellen, die in besonders einfacher Weise eine große Höhendifferenz ausgleichen kann und welche weiterhin sehr leicht verlängerbar und erweiterbar ist.

Die Aufgabe wird erfindungsgemäß durch eine teleskopierbare Kappenzuführung gemäß Anspruch 1 gelöst. Vorteilhafte Weiterbildungen der Erfindung sind in den abhängigen Ansprüchen angegeben.

Die erfindungsgemäße teleskopierbare Kappenzuführung weist einen Kappenkanal auf, der in zumindest einem Abschnitt zwischen einem ausgezogenen und einem zusammengeschobenen Zustand längenverstellbar ist. Der Kappenkanal ist aus mindestens drei Segmenten gebildet, wobei jedes Segment verschieblich an den angrenzenden Segmenten festgelegt ist. Idealerweise ist der Kanal aus einer Vielzahl von glieder- oder kettenartig ineinandergreifenden Segmenten oder Kanalelementen geformt.

Die Ausgestaltung des Kappenkanals aus mehreren, jeweils zu den angrenzenden Segmenten verschieblichen Segmenten führt in vorteilhafter Weise dazu, dass sowohl eine besonders große Längenänderung des Kappenkanals zwischen dem ausgezogenen und dem zusammengeschobenen Zustand möglich ist, als auch dass der Kappenkanal durch Hinzufügen oder Entfernen weiterer Segmente besonders einfach verlängert bzw. verkürzt und somit an die maximal erforderliche Länge angepasst werden kann. Schließlich führt die verschiebliche Anordnung zahlreicher, den Kappenkanal bildender Segmente, falls erwünscht, zu einer Flexibilität des Kappenkanals, nicht nur in Richtung der Längenverstellbarkeit, sondern auch orthogonal dazu, was eine erhöhte Toleranz der Positionierung der Vorrichtungen erlaubt, die mittels des Kappenkanals bzw. der Kappenzuführung miteinander verbunden werden sollen.

Bei einer Kappenzuführung handelt es sich grundsätzlich um eine Vorrichtung, die zur Weiterleitung von Kappen geeignet ist, wobei die Kappen hintereinander bzw. in einer Reihe weitergeleitet werden. Die Bewegung der Kappen wird dabei durch die Schwerkraft bewirkt oder erfolgt aufgrund einer aktiven Zuleitung von Kappen zur Kappenzuführung, beispielsweise mittels eines Kappenförderers. In der Kappenzuführung werden die Kappen gegebenenfalls von weiteren zugeführten Kappen vorangeschoben. Bevorzugt findet kein aktiver Transport der Kappen in der Kappenzuführung, insbesondere im Kappenkanal statt und es ist keine Antriebsvorrichtung für die Kappen an der Kappenzuführung und insbesondere im Kappenkanal vorgesehen. Besonders bevorzugt ist die Kappenzuführung zur Weiterleitung von Kappen zwischen einer Sortiermaschine, die alle Kappen in eine gleiche Lage ausrichtet, und einem Verschließer, insbesondere einem Kronkorkenverschließer, vorgesehen.

Bei den zu transportierenden Kappen kann es sich grundsätzlich um einen beliebigen Gefäßverschluss handeln. Bevorzugt ist eine Kappe ein Flaschenverschluss und besonders bevorzugt ein Schraubdeckel oder ein Schnappdeckel und ganz besonders bevorzugt ein Kronkorken.

Bei dem Kappenkanal handelt es sich grundsätzlich um den Abschnitt der Kappenzuführung, in dem die Kappen weitergeleitet werden, wobei der Kappenkanal derart gebildet ist, dass die Kappen nicht aus dem Kappenkanal herausfallen können. Dazu sind die Kappen bevorzugt im gesamten Kappenkanal in beide Raumrichtungen senkrecht zur Richtung der Längenverstellbarkeit bzw. zu der Transportrichtung einer Kappe im Kappenkanal zumindest abschnittsweise geführt bzw. abgestützt. Weiterhin ist der Kappenkanal derart gebildet, dass eine Rotation der Kappen lediglich entlang des Umfangs einer runden Kappe, jedoch nicht in die übrigen beiden Raumrichtungen möglich ist, wodurch eine Lagesortierung der Kappen, insbesondere nach einer Ober- und Unterseite, verloren gehen würde. Der Kappenkanal ist grundsätzlich aus mehreren Segmenten, bevorzugt aus allen Segmenten gebildet. Dabei bildet bevorzugt jedes der aneinander angrenzenden Segmente bzw. jeweils ein Paar von Segmenten einen Abschnitt des Kappenkanals. Die Segmente können grundsätzlich aus einem beliebigen Material gebildet sein. Bevorzugt sind die Segmente jedoch aus Kunststoff gebildet und dabei ganz besonders bevorzugt in einem Spritzgussverfahren hergestellt.

Unter einer teleskopierbaren Kappenzuführung wird eine Kappenzuführung verstanden, die in wenigstens einer Raumrichtung längenverstellbar ist, ohne dass ein Umbau notwendig ist und ohne die Funktion der Kappenzuführung einzuschränken oder zu beeinträchtigen. Dabei ist zumindest ein Abschnitt der Kappenzuführung, insbesondere des Kappenkanals, längenverstellbar. Bevorzugt ist der gesamte Kappenkanal längenverstellbar. Darüber hinaus kann die teleskopierbare Kappenzuführung aber auch in weitere Raumrichtungen beweglich, insbesondere biegbar, sein.

Als längenverstellbar wird ein Kappenkanal bzw. ein Abschnitt eines Kappenkanals angesehen, der zwischen einem ausgezogenen Zustand und einem zusammengeschobenen Zustand in seiner Länge beliebig variierbar ist, d.h., jede zwischen den beiden Zuständen liegende Länge annehmen kann. Dabei liegt insbesondere keine Verstellbarkeit lediglich mit einer festgelegten Anzahl an vorbestimmten Längen vor. Die Längenverstellbarkeit ist dabei im Sinne einer passiven Einstellbarkeit zu verstehen, d.h., das längenverstellbare Teil kann durch Einwirken einer äußeren Kraft in seiner Erstreckung in einer Raumrichtung verändert werden.

Dabei muss die Längenänderung nicht gleichmäßig über den gesamten Kappenkanal erfolgen. Bevorzugt wird bei einer Verlängerung eines im zusammengeschobenen Zustand befindlichen Kappenkanals zunächst das oberste Segment in eine maximalmögliche Distanz zu dem darunterliegenden Segment bewegt, so dass sich die beiden oberen Segmente in einem ausgezogenen Zustand befinden, während der übrige Kappenkanal noch im zusammengeschobenen Zustand ist. Bei einer weiteren Verlängerung erfolgt dann eine Beabstandung des darunterliegenden Segments von dem wiederum darunterliegenden Segment. Dieser Fortgang setzt sich bei einer weiteren Verlängerung des Kappenkanals fort, bis sich auch die beiden untersten Segmente im ausgezogenen Zustand befinden und somit alle Segmente des Kappenkanals bzw. des längenverstellbaren Abschnitts im ausgezogenen Zustand sind. Ein Zusammenschieben des Kappenkanals kann entsprechend auch ungleichmäßig über den gesamten Kappenkanal erfolgen, wobei insbesondere die Verringerung des Abstandes der Segmente zueinander von unten nach oben erfolgt.

Der ausgezogene Zustand ist grundsätzlich der Zustand maximaler Längung des längenverstellbaren Teils des Kappenkanals, d.h., der Zustand in dem sich die Segmente des Kappenkanals in einem maximal möglichen Abstand zueinander befinden. Entsprechend ist der zusammengeschobene Zustand der Zustand minimaler Längung des längenverstellbaren Teils des Kappenkanals, bei dem sich die Segmente in einem minimal möglichen Abstand, bevorzugt in direktem Kontakt zueinander befinden.

Erfindungsgemäß ist der Kappenkanal aus mindestens 3 Segmenten gebildet. Bevorzugt umfasst der Kappenkanal allerdings mindestens 5 Segmente, besonders bevorzugt mindestens 10 Segmente und ganz besonders bevorzugt mindestens 15 Segmente. Unter angrenzenden Segmenten werden Segmente verstanden, die unmittelbar aneinander angeordnet sind und/oder gemeinsam einen ununterbrochenen Teil des Kappenkanals bilden. Bevorzugt sind alle Segmente in einer Kette hintereinander, insbesondere in Richtung der Längenverstellbarkeit und/oder der Transportrichtung einer Kappe im Kappenkanal angeordnet.

Unter einer verschieblichen Festlegung der Segmente aneinander wird eine Anordnung verstanden, bei der der maximale und minimale Abstand angrenzender Segmente, insbesondere durch die Form der Segmente, festgelegt ist. Bevorzugt sind angrenzende Segmente zumindest abschnittsweise ineinander verschieblich festgelegt.

Nach einer bevorzugten Weiterbildung der erfindungsgemäßen teleskopierbaren Kappenführung sind die Segmente wenigstens im ausgezogenen Zustand aneinander aufgehängt und/oder im zusammengeschobenen Zustand aufeinander anliegen oder aneinander angeordnet, wodurch in besonders einfacher Weise eine Längenverstellbarkeit des Kappenkanals erreicht werden kann. Insbesondere erfolgt die Aufhängung bzw. das Anliegen im Bereich der Oberseite und der Unterseite jedes Segments in Bezug zu einer Bewegungsrichtung einer Kappe im Kappenkanal bzw. zur Richtung der Längenverstellbarkeit des Kappenkanals.

Bei der erfindungsgemäßen teleskopierbaren Kappenführung weist jedes Segment ein oberes Verbindungselement und ein unteres Verbindungselement zur Anordnung bzw. zum Aufhängen und/oder Aufliegen an einem angrenzenden Segment auf, mittels denen die einzelnen Segmente bevorzugt eine längenverschiebliche Kette bildend aneinander angeordnet sind. Dabei sind die oberen und die unteren Verbindungselemente bevorzugt korrespondierend zueinander gestaltet, so dass beispielsweise ein oberes Verbindungselement eines Segments mit dem unteren Verbindungselement des benachbarten, darüberliegenden Segment derart zusammenwirken kann, dass beide Segmente zum einen zueinander verschieblich sind und zum anderen das untere Segment, insbesondere im ausgezogenen Zustand, an dem darüberliegenden Segment aufgehängt ist. Besonders bevorzugt erfolgt die Verbindung der Segmente untereinander ausschließlich über die Verbindungselemente.

Bei der erfindungsgemäßen teleskopierbaren Kappenführung weist das obere Verbindungselement eines Segments eine auf das darunterliegende Segment gerichtete obere Kontaktfläche und/oder das untere Verbindungselement eines Segments eine auf das darüberliegende Segment gerichtete untere Kontaktfläche auf, wodurch zwei angrenzende Segmente im ausgezogenen Zustand durch Kontakt beider Kontaktflächen besonders einfach und kontrolliert aneinander aufgehängt werden können.

Weiterhin liegen die aufeinander gerichteten Kontaktflächen zweier angrenzender Segmente im ausgezogenen Zustand zumindest abschnittsweise aneinander an und insbesondere bevorzugt sind die beiden Segmente an den Kontaktflächen aneinander aufgehängt, während im Bereich der Auflageflächen kein Kontakt zwischen den Segmenten besteht. Ganz besonders bevorzugt erfolgt die Aufhängung der Segmente aneinander, insbesondere im ausgezogenen Zustand, ausschließlich über die Kontaktflächen.

Bei der erfindungsgemäßen teleskopierbaren Kappenführung weist das obere Verbindungselement und/oder das Führungselement eines Segments eine auf das darüberliegende Segment gerichtete obere Auflagefläche auf. Weiterhin weist zusätzlich auch das untere Verbindungselement und/oder das Führungselement eines Segments eine auf das darunterliegende Segment gerichtete untere Auflagefläche auf, wodurch zwei angrenzende Segmente im zusammengeschobenen Zustand durch Kontakt beider Auflageflächen besonders einfach und kontrolliert aufeinander anliegen können.

Besonders vorteilhaft ist dabei eine Weiterbildung, bei der im zusammengeschobenen Zustand die aufeinander gerichteten Auflageflächen zweier angrenzender Segmente zumindest abschnittsweise aneinander anliegen, insbesondere aufeinander liegen, während im Bereich der Kontaktflächen kein Kontakt zwischen den Segmenten besteht. Ganz besonders bevorzugt erfolgt die Auflage der Segmente aufeinander, insbesondere im zusammengeschobenen Zustand, ausschließlich über die Auflageflächen.

Dabei wird als obere Kontaktfläche bzw. obere Auflagefläche jeweils eine Fläche verstanden, die am oberen Verbindungselement und/oder entlang der Bewegungsrichtung einer Kappe im Kappenkanal in einem oberen Bereich des Segments angeordnet ist. Entsprechend ist die untere Kontaktfläche bzw. die untere Auflagefläche am unteren Verbindungselement und/oder entlang der Bewegungsrichtung einer Kappe im Kappenkanal in einem unteren Bereich des Segments angeordnet.

Dabei sind ganz besonders bevorzugt die obere Kontaktfläche sowie die obere Auflagefläche und/oder die untere Kontaktfläche sowie die untere Auflagefläche jeweils auf sich gegenüberliegenden Seiten des jeweiligen Verbindungselements angeordnet und/oder parallel zueinander ausgerichtet.

Bei einer alternativen, ebenfalls bevorzugten Ausgestaltung der erfindungsgemäßen teleskopierbaren Kappenzuführung sind die Kontaktflächen an einem an dem Segment angeformten Hakenelement angeordnet, das in einen korrespondierenden Führungsschlitz eines weiteren, besonders bevorzugt des darunterliegenden Segments eingreift. Das Hakenelement ist dabei bevorzugt auf das darunterliegende Segment ausgerichtet. Ebenfalls bevorzugt weist jedes Segment an zwei gegenüberliegenden Seiten und/oder an einer von dem Kappenkanal abgewandten Außenseite jeweils ein Hakenelement und einen Führungsschlitz auf.

Bei der erfindungsgemäßen teleskopierbaren Kappenführung weist jedes Segment einen Führungsabschnitt zur mehrseitigen Führung einer Kappe im Kappenkanal auf, wobei der Kappenkanal zumindest teilweise, bevorzugt vollständig aus den Führungsabschnitten gebildet ist. Darüber hinaus kann der Kappenkanal abschnittsweise und/oder über einen Teil des Umfangs orthogonal zur Bewegungsrichtung einer Kappe im Kappenkanal auch durch ein weiteres Bauteil der Kappenführung, insbesondere durch ein Teil einer Tragstruktur gebildet sein. Unter einer mehrseitigen Führung wird grundsätzlich eine Führung der Kappe an wenigstens zwei, bevorzugt wenigstens drei Seiten in wenigstens einem Abschnitt der Kappe verstanden. Ganz besonders bevorzugt erfolgt eine wenigstens abschnittsweise Führung zu vier Seiten der Kappe, so dass die Kappe lediglich entlang des Kappenkanals beweglich ist und ansonsten zu den übrigen Seiten durch den Führungsabschnitt geführt wird. Dabei muss sich nicht jede Seite des Führungsabschnitts zu jeder Zeit im Kontakt mit einer darin befindlichen Kappe befinden. Vielmehr ist der Führungsabschnitt bevorzugt lediglich derart gebildet, dass eine Rotation der Kappe und/oder ein Vorbeigleiten mehrerer Kappen aneinander innerhalb des Kappenkanals verhindert wird.

Bei einer besonders vorteilhaften Ausgestaltung der erfindungsgemäßen teleskopierbaren Kappenzuführung ist das Führungselement trichterförmig gebildet, wobei die trichterförmigen Führungselemente angrenzender Segmente ineinander verschoben werden können bzw. ineinander eingreifen können. Insbesondere bevorzugt ist der trichterförmige Führungsabschnitt dabei rechtwinklig zur Bewegungsrichtung der Kappen im Kappenkanal über den gesamten Umfang geschlossen.

Nach einer vorteilhaften Weiterbildung der erfindungsgemäßen teleskopierbaren Kappenzuführung weisen alle Segmente eine identische Form auf, wodurch zum einen die Kappenzuführung besonders kostengünstig hergestellt werden kann und zum anderen eine Verlängerung der Kappenführung durch Anfügen weiterer Segmente in besonders einfacher Weise möglich ist. Bevorzugt sind wenigstens alle den Kappenkanal bildende Segmente identisch zueinander. Insbesondere weisen alle Segmente eine identische Form und/oder Größe auf und/oder sind aus einem identischen Material gebildet.

Alternativ können auch jeweils zwei Segmente paarweise zueinander passend gebildet sein, wobei besonders bevorzugt jeweils die Kontaktflächen aufweisenden Bereiche zweier angrenzender Segmente senkrecht zu einer Bewegungsrichtung der Kappen im Kappenkanal seitlich zueinander versetzt angeordnet sind. Besonders bevorzugt sind dabei zwei angrenzende Segmente dadurch verschieblich miteinander verbunden, dass ein Bolzen eines der Segmente entlang der Richtung der Längsverstellbarkeit beweglich in einem Bolzenkanal des anderen Segments angeordnet ist. Besonders bevorzugt weist der Bolzen am Ende einen größeren Durchmesser als der Bolzenkanal auf oder am Ende des Bolzens ist ein Bauteil, insbesondere ein Ring, mit größerem Durchmesser angeordnet, wobei durch den Bereich des größeren Durchmessers die Kontaktfläche gebildet wird. Dabei weist jedes Segment bevorzugt an zwei Seiten einen Bolzen bzw. einen Bolzenkanal auf, wobei beide Bolzen bevorzugt in eine gemeinsam Richtung der Längsverstellbarkeit des Kappenkanals ausgerichtet sind.

Bei einer vorteilhaften Ausgestaltung der erfindungsgemäßen teleskopierbaren Kappenzuführung sind die Segmente jeweils einstückig gebildet, wodurch eine besonders einfache und kostengünstige Herstellung möglich ist und der Kappenkanal in besonders einfacher Weise verlängert werden kann. Dabei wird ein Segment entweder bereits einstückig hergestellt, insbesondere aus Kunststoff gegossen, oder aus mehreren stoffschlüssig aneinander festgelegten, insbesondere miteinander verklebten Teilen gebildet.

Alternativ kann jedes der Segmente auch mehrstückig gebildet sein, wobei jedes Segment dabei bevorzugt zwei Verbindungselemente zur Anordnung an einem angrenzenden Segment umfasst. Ganz besonders bevorzugt ist jedes Segment aus drei Teilen gebildet. Der erste Teil umfasst dabei den Führungsabschnitt und bevorzugt auch Auflageflächen, während die anderen beiden Teile bevorzugt die Kontaktflächen und auch Auflageflächen aufweisen und besonders bevorzugt identisch zueinander gebildet sind. Ganz besonders bevorzugt handelt es sich bei diesen zwei Teilen jeweils um eine Halteöse bzw. eine Haltelaschen.

Nach einer bevorzugten Weiterbildung der erfindungsgemäßen teleskopierbaren Kappenzuführung ist der Kappenkanal wenigstens im ausgezogenen Zustand in einer Richtung senkrecht zur Bewegungsrichtung der Kappen abschnittsweise offen, wodurch die den Kappenkanal bildenden Segmente und insbesondere deren Führungsabschnitte besonders einfach gestaltet sein können und zugleich in besonders einfacher Weise ein verlängerbarer Kappenkanal gebildet werden kann. Unter einem abschnittsweise offenen Kappenkanal wird insbesondere ein Kappenkanal mit Lücken zwischen den Führungsabschnitten angrenzender Segmente verstanden, wobei die Lücken grundsätzlich so klein sind, dass durch diese keine Kappe aus dem Kappenkanal heraus gelangen kann. Dazu sind die Lücken in jedem Zustand des Kappenkanals kleiner, bevorzugt mindestens 10%, besonders bevorzugt 20% und ganz besonders bevorzugt 50% kleiner als der Durchmesser einer Kappe bzw. der Breite des Kappenkanals. Alternativ kann der Kappenkanal auch nicht über den gesamten Umfang senkrecht zur Bewegungsrichtung der Kappen geschlossen sein, sondern eine Öffnung aufweisen, die entlang der Umfangsrichtung kleiner ist als der Durchmesser einer Kappe. Grundsätzlich kann der Kappenkanal auch unabhängig vom Zustand teilweise offen sein, insbesondere eine Lücke oder eine Öffnung aufweisen.

Nach einer ebenfalls bevorzugten Weiterbildung der erfindungsgemäßen teleskopierbaren Kappenzuführung ist der Kappenkanal wenigstens im zusammengeschobenen Zustand über den gesamten Umfang und/oder über die gesamte Länge geschlossen gebildet, wodurch eine sichere Führung der Kappen im Kappenkanal gewährleistet wird. Eine geschlossene Form kann ausschließlich über die Segmente und bevorzugt dabei ausschließlich durch die Führungsabschnitte erreicht werden. Darüber hinaus kann die geschlossene Form aber auch mittels weiteren Bauteilen der Kappenführung, insbesondere einer Tragstruktur, die an wenigstens einer Seite den Kappenkanal schließt, erreicht werden.

Bei einer vorteilhaften Weiterbildung der erfindungsgemäßen teleskopierbaren Kappenzuführung sind die Segmente in jedem Zustand des Kappenkanals derart angeordnet, dass jede Kappe wenigstens im längenverstellbaren Teil, bevorzugt im gesamten Kappenkanal durchgehend durch wenigstens zwei angrenzende Segmente geführt wird. Dazu weist bevorzugt jedes Segment in Bewegungsrichtung der Kappe im Kappenkanal eine geringere Höhe als der Durchmesser der Kappe bzw. der Breite des Kappenkanals auf. Alternativ kann eine Kappe, zumindest abschnittsweise entlang des Kappenkanals, auch lediglich durch ein einzelnes Segment geführt werden, wobei das Segment und ganz besonders bevorzugt der Führungsabschnitt des Segments dazu entlang der Bewegungsrichtung der Kappen im Kappenkanal zwischen ein- und fünfmal, besonders bevorzugt zwischen ein- und dreimal und ganz besonders bevorzugt zwischen anderthalb- und zweimal so lang ist wie der Durchmesser der Kappen bzw. die Breite des Kappenkanals beträgt.

Einer ebenfalls vorteilhafte Weiterbildung der erfindungsgemäßen teleskopierbaren Kappenzuführung weist eine sich wenigstens entlang des längenverstellbaren Teils des Kappenkanals, bevorzugt über die gesamte Länge des Kappenkanals erstreckende Tragstruktur auf, wobei jedes Segment einen zur Führung an der Tragstruktur geformten Bereich umfasst, wodurch in besonders einfacher Weise eine Verringerung des Spiels bzw. eine Festlegung der Segmente in wenigstens einer Raumrichtung rechtwinklig zur Richtung der Längenveränderbarkeit erreicht werden kann. Dabei ist die Tragstruktur bevorzugt einstückig oder alternativ aus zwei zueinander identischen, einstückigen Elementen gebildet. Besonders bevorzugt ist die Tragstruktur eine Stange, bevorzugt zwei parallel zueinander angeordnete Stangen mit rundem Querschnitt. Alternativ kann die Tragstruktur einen rechteckigen Querschnitt quer zu der Bewegungsrichtung einer Kappe im Kappenkanal aufweisen und besonders bevorzugt weiterhin wenigstens eine, bevorzugt an zwei sich gegenüberliegenden Seiten jeweils eine entlang der Bewegungsrichtung der Kappen im Kappenkanals verlaufende Nut aufweisen, wobei sich die Nut ganz besonders bevorzugt wenigstens über die gesamte Länge des längenverstellbaren Bereich des Kappenkanals erstreckt.

Weiterhin bevorzugt ist im Bereich des Segments zur Führung an der Tragstruktur eine Aufnahmeöffnung zur wenigstens abschnittsweisen, bevorzugt allseitigen Aufnahme einer bzw. jeder der beiden Tragstrukturen oder alternativ wenigstens ein, bevorzugt zwei sich gegenüberliegende Bereiche zur Führung innerhalb einer Nut vorgesehen. Besonders bevorzugt weist das Segment jeweils eine runde Ausnehmung zur Aufnahme einer Stange auf.

Alternativ kann die Führung an der Tragstruktur, insbesondere an einer oder besonders bevorzugt an zwei zueinander parallelen Stangen, mittels einer Rastöffnung für jede Stange erfolgen, die die Stange in einem Winkelbereich zwischen 185° und 300°, bevorzugt zwischen 190° und 270°, besonders bevorzugt zwischen 200° und 240° und ganz besonders bevorzugt zwischen 220° und 230° umgibt, wodurch das Segment in besonders einfacher Weise an der Tragstruktur bzw. der Stange angeordnet werden kann.

Bei einer bevorzugten Ausgestaltung der erfindungsgemäßen teleskopierbaren Kappenzuführung sind die Einzelsegmente, insbesondere entlang der Höhe des Kappenkanals alternierend, von zwei sich gegenüberliegenden Seiten an wenigstens einem, bevorzugt an zwei parallel zueinander verlaufenden Tragstrukturen angeordnet, wobei besonders bevorzugt der Kappenkanal aus wenigstens zwei sich gegenüberliegenden Segmenten gebildet wird. Ganz besonders bevorzugt bildet dabei das eine Segment die Vorderseite und das zweite Segment die Rückseite des Kappenkanals. Die Seiten des Kappenkanals können bei einer solchen Ausführung durch beide Segmente, jede der Seiten durch eines der Segmente oder beide Seiten durch eines der Segmente gebildet werden. Ganz besonders bevorzugt sind bei einer solchen Ausführung beide Segmente identisch zueinander. Weiterhin bevorzugt ist bei einer solchen Ausführung jedes Segment mit jeweils einem darüberliegenden und einem darunterliegendem Segment in Kontakt bzw. verschieblich daran angeordnet, wobei die beiden weiteren Segmente sich auf der gegenüberliegenden Seite der Tragstruktur bzw. der beiden Tragstrukturen befinden. Ganz besonders bevorzugt sind die Segmente auf gegenüberliegenden Seiten der Tragstruktur entlang der Bewegungsrichtung einer Kappe im Kappenkanal ineinander versetzt und/oder verschieblich angeordnet. Bei einer solchen Ausführung erfolgt somit die Führung einer Kappe im Kappenkanal wenigstens zugleich durch zwei sich gegenüberliegend angeordneter Segmente und ganz besonders bevorzugt zu jedem Zeitpunkt durch wenigstens drei Segmente.

Bei einer vorteilhaften Weiterbildung der erfindungsgemäßen teleskopierbaren Kappenzuführung ist an einem Ende, insbesondere am unteren Ende des Kappenkanals eine Kappenzuführrinne, die insbesondere um 90° gebogen verläuft, angeordnet.

Bei einer ebenfalls vorteilhaften Weiterbildung der erfindungsgemäßen teleskopierbaren Kappenzuführung ist am oberen Ende des Kappenkanals ein Fixierelement oder eine Aufnahme zur Festlegung der Kappenzuführung an einem Kappensortierer angeordnet. Ebenfalls bevorzugt kann alternativ oder zusätzlich auch am oberen Ende des Kappenkanals ein Verteilkopf angeordnet sein.

Mehrere Ausführungsbeispiele der erfindungsgemäßen teleskopierbaren Kappenzuführung werden nachstehend mit Bezug auf die Zeichnungen näher erläutert. In den Figuren zeigen:
- Fig. 1a: eine schematische Ansicht einer ersten Ausführungsform einer teleskopierbaren Kappenzuführung an einem Verschließer mit einem Kappenkanal im zusammengeschobenen Zustand,
- Fig. 1b: eine schematische Ansicht der in Fig. 1a dargestellten Ausführungsform mit dem Kappenkanal im ausgezogenen Zustand,
- Fig. 2a: in einer seitlichen Schnittzeichnung eine erste Ausführungsform eines Kappenkanals im ausgezogenen Zustand,
- Fig. 2b: in einer seitlichen Schnittzeichnung die in Fig. 2a gezeigte Ausführungsform des Kappenkanals im zusammengeschobenen Zustand,
- Fig. 2c: eine perspektivische Ansicht eines Segments des in Fig. 2a gezeigten Kappenkanals,
- Fig. 2d: eine perspektivische Ansicht der in Fig. 2a gezeigten Ausführungsform des Kappenkanals im zusammengeschobenen Zustand,
- Fig. 2e: eine perspektivische Ansicht der in Fig. 2a gezeigten Ausführungsform des Kappenkanals im ausgezogenen Zustand,
- Fig. 3a: in einer seitlichen Schnittzeichnung eine zweite Ausführungsform eines Kappenkanals auf der linken Seite im ausgezogenen Zustand und auf der rechten Seite im zusammengeschobenen Zustand,
- Fig. 3b: in einer Schnittzeichnung entlang der Verlaufsrichtung des Kappenkanals die in Fig. 3a gezeigte Ausführungsform,
- Fig. 3c: eine perspektivische Ansicht eines Segments des in Fig. 3a gezeigten Kappenkanals,
- Fig. 3d: eine perspektivische Ansicht der in Fig. 3a gezeigten Ausführungsform des Kappenkanals im zusammengeschobenen Zustand,
- Fig. 3e: eine perspektivische Ansicht der in Fig. 3a gezeigten Ausführungsform des Kappenkanals im ausgezogenen Zustand,
- Fig. 4a: in einer seitlichen Schnittzeichnung eine dritte Ausführungsform eines Kappenkanals im zusammengeschobenen Zustand,
- Fig. 4b: in einer seitlichen Schnittzeichnung die in Fig. 4a gezeigte Ausführungsform des Kappenkanals im ausgezogenen Zustand,
- Fig. 4c: eine perspektivische Ansicht eines Segments des in Fig. 4a gezeigten Kappenkanals,
- Fig. 4d: eine perspektivische Ansicht der in Fig. 4a gezeigten Ausführungsform des Kappenkanals im zusammengeschobenen Zustand,
- Fig. 4e: eine perspektivische Ansicht der in Fig. 4a gezeigten Ausführungsform des Kappenkanals im ausgezogenen Zustand,
- Fig. 5a: in einer seitlichen Schnittzeichnung eine vierte Ausführungsform eines Kappenkanals im zusammengeschobenen Zustand,
- Fig. 5b: in einer seitlichen Schnittzeichnung die in Fig. 5a gezeigte Ausführungsform des Kappenkanals im ausgezogenen Zustand,
- Fig. 6a: eine perspektivische Ansicht der Vorderseite einer fünften Ausführungsform eines Kappenkanals im ausgezogenen Zustand,
- Fig. 6b: eine perspektivische Ansicht der Vorderseite der in Fig. 6a gezeigten Ausführungsform des Kappenkanals im zusammengeschobenen Zustand,
- Fig. 6c: eine perspektivische Ansicht der Rückseite der in Fig. 6a gezeigten Ausführungsform des Kappenkanals im zusammengeschobenen Zustand und
- Fig. 6d: eine perspektivische Ansicht der Rückseite der in Fig. 6a gezeigten Ausführungsform des Kappenkanals im ausgezogenen Zustand.

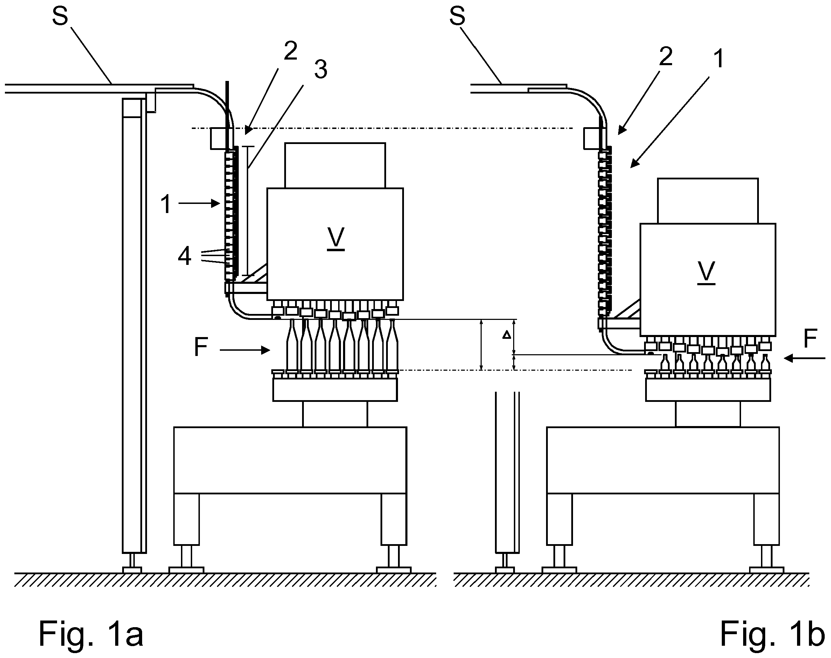

Bei einer in Fig. 1a schematisch dargestellten ersten Ausführungsform einer teleskopierbare Kappenzuführung 1 ist ein Kappenkanal 2 an einem Verschließer V zum Verschließen von Flaschen F mittels Kronkorken K angeschlossen. Die Kronkorken K werden dem Kappenkanal 2 aus einem Sortierer S zugeführt, der die Kronkorken K in eine zum Verschließen der Flaschen F geeignete Lage bringt. Der Kappenkanal 2 befindet sich in einem zusammengeschobenen Zustand, da die zu verschließenden Flaschen F große sind und daher der Verschließer V entsprechend hoch bzw. nahe an dem Sortierer S angeordnet ist.

Zum Verschließen kleinerer Flaschen F wird der Verschließer V entsprechend im Bezug zum Sortierer S abgesenkt, wie es in Fig. 1b dargestellt ist, wodurch sich der Kappenkanal 2 der teleskopierbaren Kappenzuführung 1 in einem längenverstellbaren Abschnitt 3 der geänderten Höhe des Verschließers V anpassen muss. Dazu ist der Kappenkanal 2 aus zahlreichen, verschieblich aneinander angeordneten Segmenten 4 gebildet.

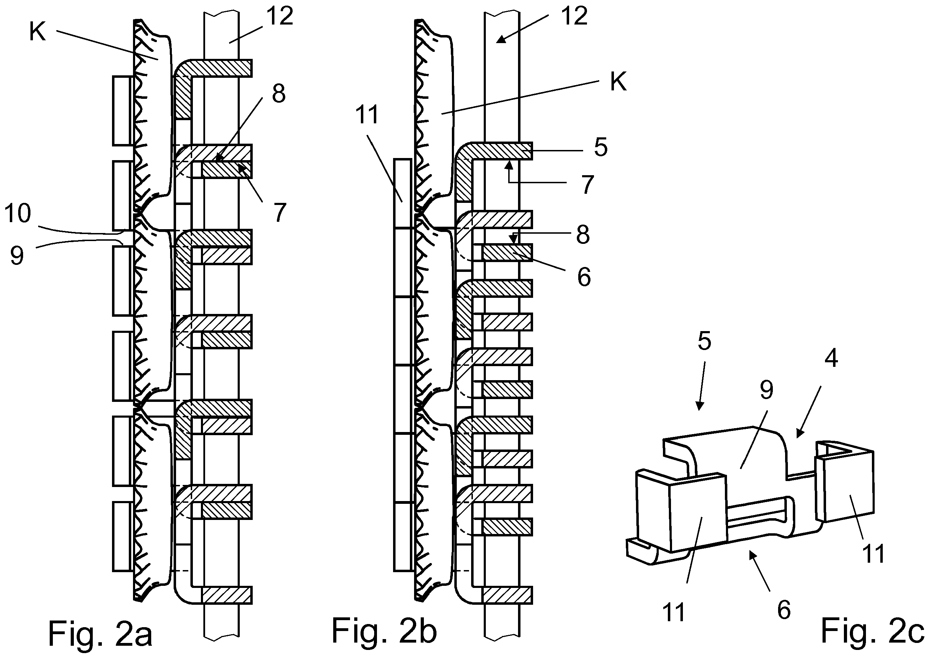

Bei einer erster Ausführungsform eines Kappenkanals 2 sind zahlreiche Segmente 4 aneinander angrenzend an einer Tragstruktur 12 sowie ineinander verschieblich angeordnet (siehe Fig. 2a, b). Dabei sind alle Segmente 4 identisch zueinander gebildet und weisen einen Abschnitt des Kappenkanals 2 bildenden Führungsabschnitt 11 auf, der einen Kronkorken K zu allen vier Seiten rechtwinklig zu einer Bewegungsrichtung B des Kronkorkens K im Kappenkanal 2 zumindest abschnittsweise umgibt (siehe Fig. 2c). Der Kappenkanal 2 ist sowohl im ausgezogenen als auch im zusammengeschobenen Zustand entlang der gesamten Länge des Kappenkanals 2 teilweise an einer Seite geöffnet.

Ganz allgemein kann der Verschließer V in einer Einhausung, insbesondere einer Hygieneeinhausung untergebracht sein (nicht dargestellt). Dann befindet sich der Sortierer S vorrangig außerhalb dieser Einhausung und auf einem festen Höhenniveau. Der Kappenkanal 2 ist in diesem Fall in geeigneter Weise über oder durch eine solche Einhausung geführt.

Weiterhin kann ganz allgemein eine Hygieneschleuse am Eintritt in die Hygieneeinhausung des Verschließers und/oder mindestens eine Kappenbehandlung zur Reinigung oder Sterilisierung von Kappen K vorgesehen sein (nicht dargestellt). Solche Systeme sind grundsätzlich im Stand der Technik bekannt.

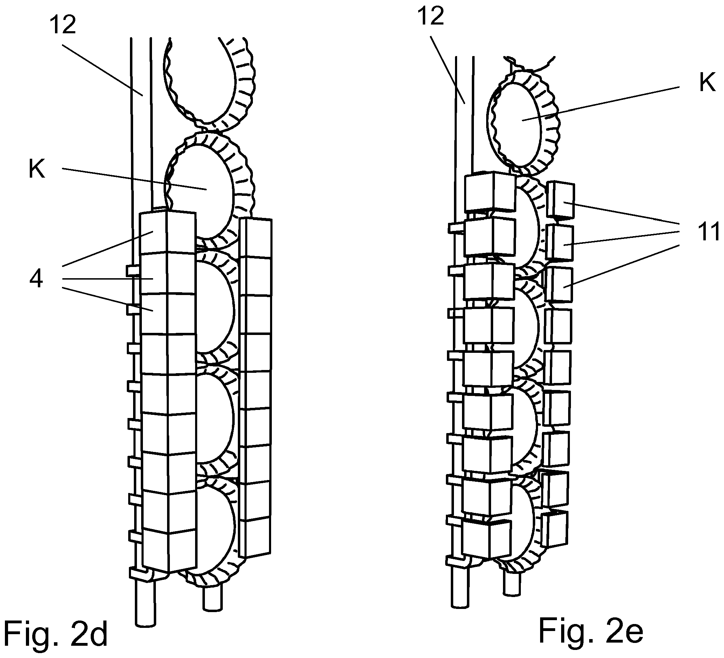

Weiterhin weist jedes Segment 4 ein oberes sowie ein unteres Verbindungselement 5, 6 auf, mittels denen die einzelnen Segmente 4 in einem ausgezogenen Zustand aneinander hängend festgelegt sind (siehe Fig. 2a, e). Dabei berühren sich im ausgezogenen Zustand aneinander angrenzende Segmente 4 lediglich an einer auf das darunterliegende Segment 4 zuweisende obere Kontaktfläche 7 des oberen Verbindungselements 5 sowie an einer auf das darüberliegende Segment 4 zuweisenden unteren Kontaktfläche 8 des unteren Verbindungselements 6. Im zusammengeschobenen Zustand liegen die jeweils angrenzenden Segmente 4 aufeinander, wobei lediglich Kontakt zwischen den benachbarten Segmenten 4 im Bereich einer oberen und einer unteren Auflagefläche 9, 10 besteht, die am oberen und unteren Rand des Führungsabschnitts 11 angeordnet sind (siehe Fig. 2b, d), wodurch der Kappenkanal 2 im zusammengeschobenen Zustand wenigstens seitlich in der Bewegungsrichtung B der Kronkorken K vollständig geschlossen ist, während im ausgezogenen Zustand in dieser Richtung die einzelnen Segmente 4 sowie deren Führungsabschnitte 11 voneinander beabstandet sind.

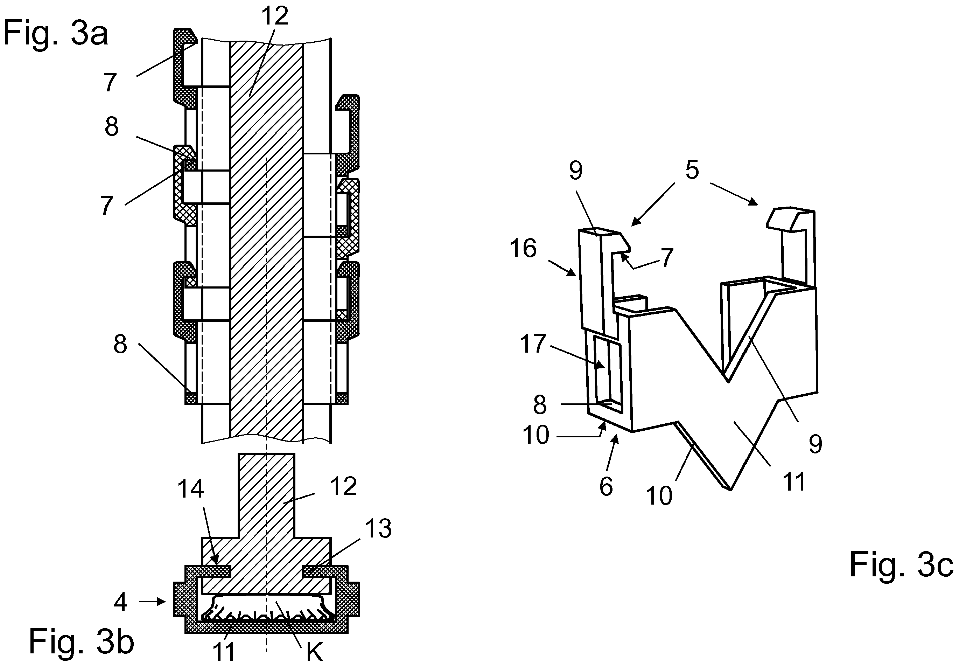

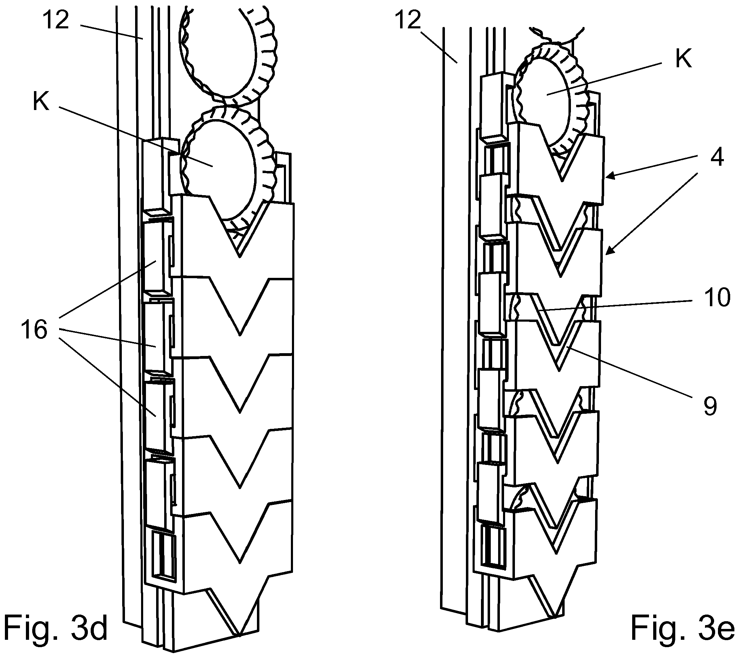

Bei einer zweiten, in Fig. 3 dargestellten Ausführungsform eines Kappenkanals 2 sind ebenfalls alle den Kappenkanal 2 bildenden Segmente 4 identisch zueinander. Jedes Segment 4 weist dabei als oberes Verbindungselement 5 ein Hakenelement 16 sowie als unteres Verbindungselement 6 einen zu dem Hakenelement 16 korrespondierenden Führungsschlitz 17 auf, in dem ein Hakenelement 16 eines angrenzenden Segments 4 verschieblich angeordnet werden kann (siehe Fig. 3c). Eine auf das daruntergelegene Segment 4 gerichtete Oberfläche des Hakenelements 16 bildet die obere Kontaktfläche 8 und eine auf das darüberliegende Segment 4 gerichtete Oberfläche des Führungsschlitzes 17 das untere Kontaktelement 7. Die obere sowie die untere Auflagefläche 9, 10 werden abermals durch einen zu drei Seiten umlaufenden oberen bzw. unteren Rand des Führungsabschnitts 11 gebildet.

Dabei sind alle Segmente 4 mittels eines Bereichs zur Führung 13 in einer sich an einer Tragstruktur 12 entlang der Länge des Kappenkanals 2 erstreckenden Nut 14 geführt (siehe Fig. 3b). Die Tragstruktur 12 ist aus einem Träger mit T-förmigem Profil aus Metall gebildet. Der Kappenkanal 2 ist im zusammengeschobenen Zustand allseitig und über die gesamte Länge geschlossen, wobei in der Umfangsrichtung des Kappenkanals 2 dieser zu drei Seiten durch den Führungsabschnitt 11 des jeweiligen Segments 4 und zu einer Seite durch eine Oberfläche der Tragstruktur 12 geschlossen ist (siehe Fig. 3a rechte Seite, Fig. 3d). Im ausgezogenen Zustand hängen die einzelnen Segmente 4 lediglich verbunden durch das in den Führungsschlitz 17 des angrenzenden Segments 4 eingehakte Hakenelement 16 aneinander, während die einzelnen Führungsabschnitte 11 voneinander beabstandet sind (siehe Fig. 3a linke Seite, Fig. 3e).

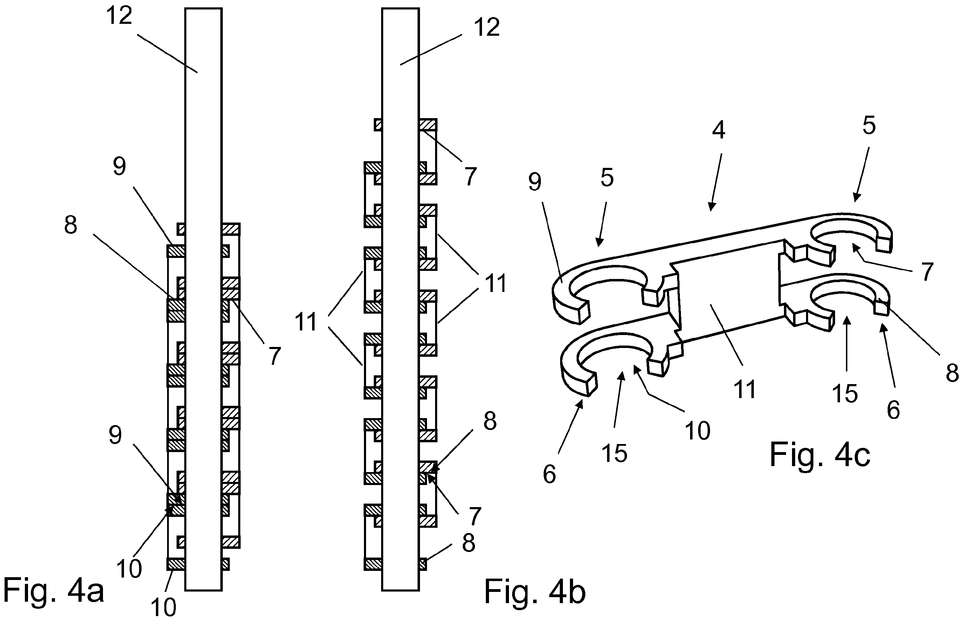

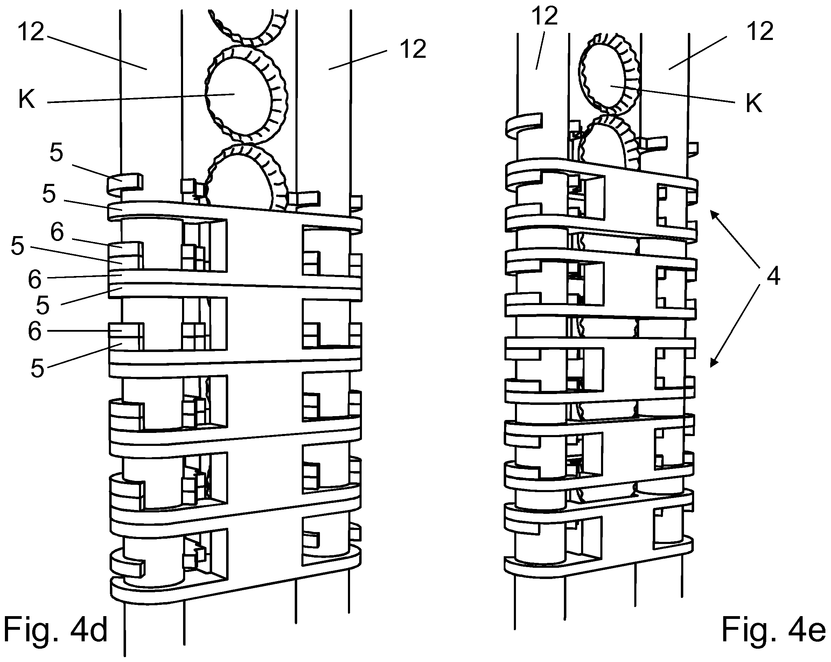

Bei einer dritten, in Fig. 4 dargestellten Ausführungsform ist ein Kappenkanal 2 abermals aus zueinander identischen Segmenten 4 gebildet, die beidseitig jeweils ein oberes sowie ein unteres Verbindungselement 5 ,6 aufweisen, wobei im Bereich des Verbindungselements 5, 6 auch jeweils eine Rastöffnung 15 zum Verrasten des Segments 4 an zwei parallel zueinander angeordneten Stäben mit rundem Querschnitt, die die Tragstruktur 12 des Kappenkanals 2 bilden, angeordnet sind. Dabei sind die Rastöffnungen 15 jeweils einen Stab zu 270° umgebend gebildet (siehe Fig. 4c, d, e). Bei dieser Ausführung des Segments 4 sind nicht nur die obere und untere Kontaktfläche 7, 8, sondern auch die obere und untere Auflagefläche 9, 10 am oberen bzw. unteren Verbindungselement 5, 6 angeordnet. Dabei befinden sich die obere Kontaktfläche 7 und die obere Auflagefläche 9 auf sich gegenüberliegenden Seiten des oberen Verbindungselements 5 und sind zusätzlich parallel zueinander ausgerichtet. Auch die untere Kontaktfläche 8 und die untere Auflagefläche 10 auf sich gegenüberliegenden Seiten des unteren Verbindungselements 6 angeordnet und liegen ebenfalls parallel zueinander (siehe Fig. 4c).

Im Unterschied zu den vorausgegangenen Ausführungen des Kappenkanals 2 ist bei der in Fig. 4 dargestellten Ausführung ein Abschnitt des Kappenkanals 2 jeweils durch zwei, von gegenüberliegenden Seiten her an der Tragstruktur 12 angeordneten Segmenten 4 gebildet, wobei jedes der Segmente 4 jeweils ein oberes Führungselement 5 eines Segments 4 auf der gegenüberliegenden Seite sowie ein unteres Führungselement 6 des darunterliegenden Segments 4 der anderen Seite der Tragstruktur 12 umfasst (siehe Fig. 4a, b).

Im ausgezogenen Zustand besteht zwischen den Segmenten 4 lediglich über die Kontaktflächen 7, 8 ein Kontakt zu einem jeweils auf der gegenüberliegenden Seite der Tragstruktur 12 angeordneten Segment 4 (siehe Fig. 4b, e). Im zusammengeschobenen Zustand liegt jedes Segment 4 dagegen mit der unteren Auflagefläche 10 auf der oberen Auflagefläche 9 eines Segments 4 auf der gleichen Seite der Tragstruktur sowie die Segmente 4 einer der beiden Seiten zusätzlich auch mit der oberen Kontaktfläche 7 auf der unteren Kontaktfläche 8 der Segmente 4 auf der anderen der beiden Seiten (siehe Fig. 4a, 4d).

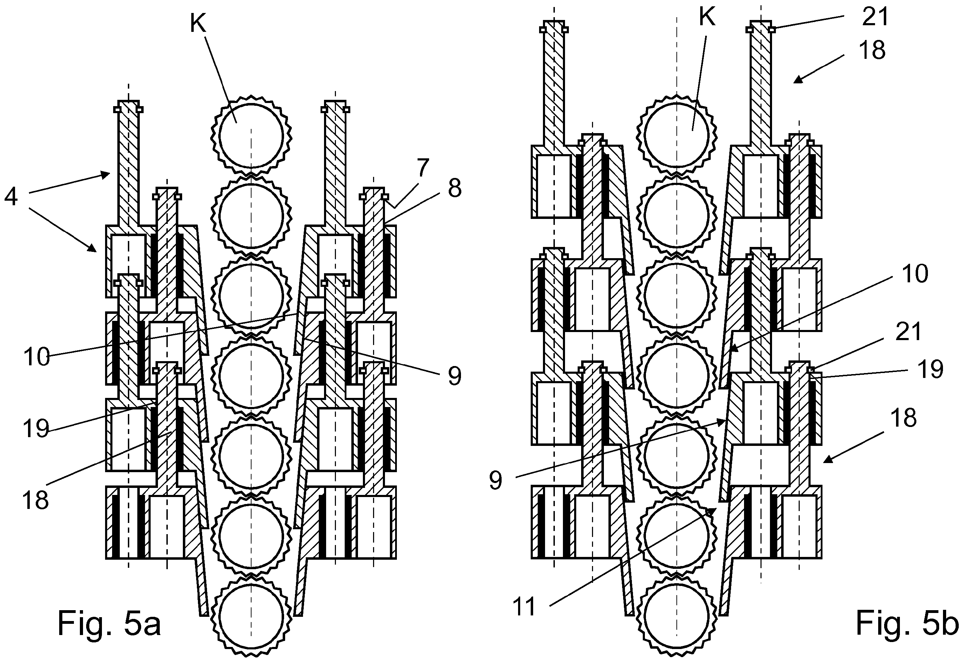

Bei der in Fig. 5 dargestellten vierten Ausführung sind die einen Kappenkanal 2 bildenden Segmente 4 ebenfalls identisch zueinander, jedoch wechselweise jeweils um 180 grad um die Längsachse zueinander verdreht montiert, so dass an jedem zweiten Segment 4 das als Bolzen 18 mit einem an einem Ende angeordneten Ring 21 gebildete obere Verbindungselement 5 an der Außenseite und das als Bolzenkanal 19 gebildete untere Verbindungselement 6 weiter innen auf einen Führungsabschnitt 11 des Segments 4 zu gerichtet angeordnet ist. Bei dem angrenzenden Segment 4 ist entsprechend der Bolzen 18 weiter innen und der Bolzenkanal 19 entsprechend weiter außen positioniert, so dass jeweils der Bolzen 18 eines Segments 4 mit dem Bolzenkanal 19 eines darüber angeordneten Segments 4 zusammenwirken kann (siehe Fig. 5a, b). Dabei weist der Bolzen 18 einen geringeren Durchmesser als der Bolzenkanal 19 auf, so dass der Bolzen 18 innerhalb des Bolzenkanals 19 verschieblich ist, während der Durchmesser des Rings 21 am Ende des Bolzens 18 größer ist als der Durchmesser des Bolzenkanals 19, wodurch die auf das darunterliegende Segment 4 gerichtete Oberfläche des Bolzens 18 die obere Kontaktfläche 7 und eine Umrandung des Bolzenkanals 19 die untere Kontaktfläche 8 bilden.

Das Führungselement 11 der vierten Ausführung ist trichterförmig gebildet, wobei die trichterförmigen Führungselemente 11 angrenzender Segmente 4 ineinander verschoben werden können und dabei ineinander eingreifen, wodurch der durch die Segmente 4 gebildete Kappenkanal 2 sowohl im ausgezogenen, als auch im zusammengeschobenen Zustand in Umfangsrichtung bzw. rechtwinklig zur Bewegungsrichtung B der Kronkorken K im Kappenkanal 2 vollständig geschlossen ist. Die obere Auflagefläche 9 ist durch einen auf der Innenseite des trichterförmigen Führungselements 11 gelegenen Oberflächenbereich gebildet, während die untere Auflagefläche 10 durch einen auf der Außenseite des trichterförmigen Führungselements 11 gelegenen Oberflächenbereich gebildet ist (Fig. 5a, b).

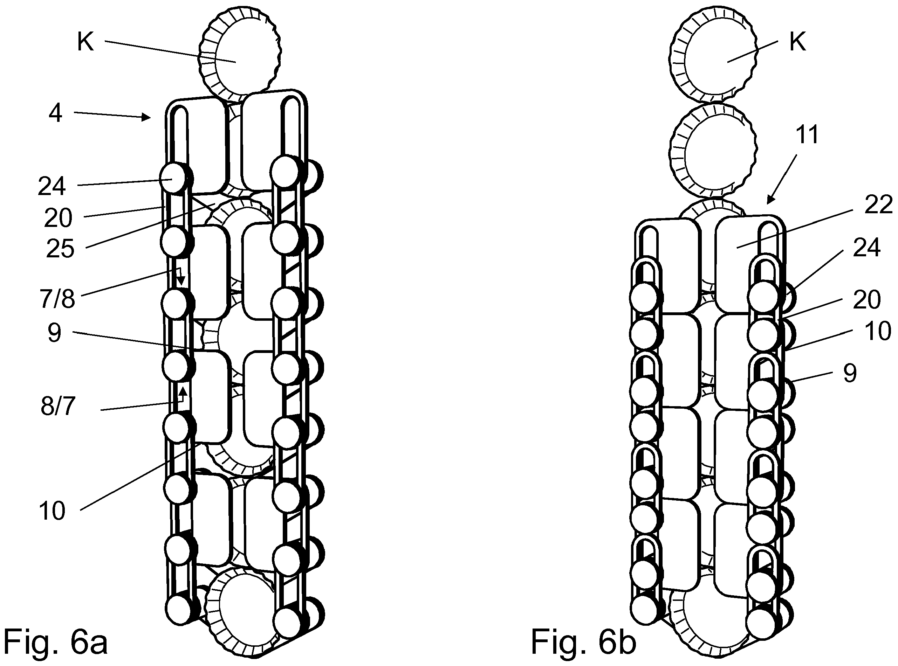

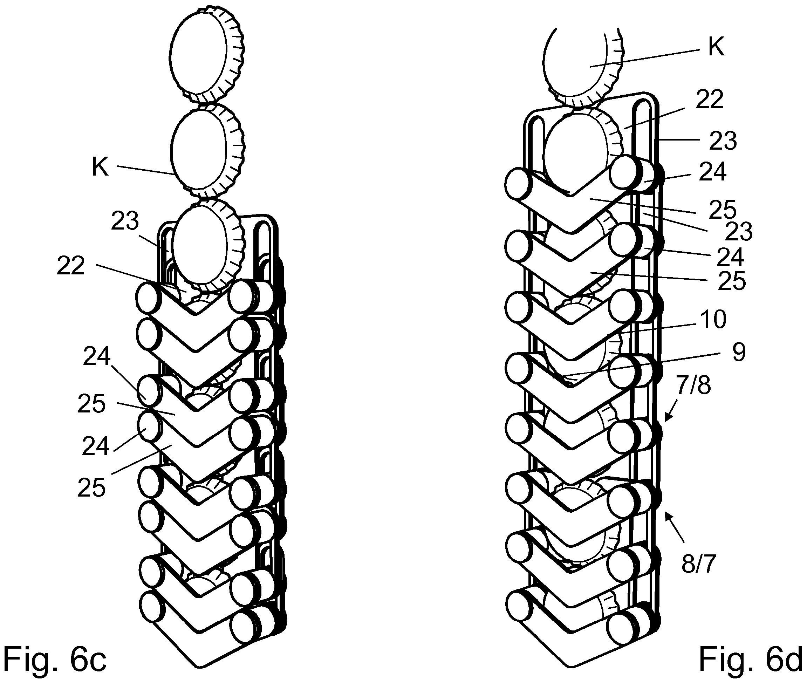

Bei einer in Fig. 6 dargestellten sechsten Ausführungsform ist jedes der Segmente 4 mehrstückig gebildet. Der Führungsabschnitt 11 ist dabei auf einer Seite des Kappenkanals 2 aus zwei zueinander parallel angeordneten Führungsplatten 22 gebildet, die jeweils einen sich in Bewegungsrichtung B der Kronkorken K erstreckenden Schlitz 23 aufweisen. In jedem der Schlitze 23 sind übereinander zwei Haltebolzen 24 beweglich, insbesondere verschieblich, festgelegt (siehe Fig. 6a, b). Auf der den Führungsplatten 22 gegenüberliegenden Seite des Kappenkanals 2 sind an jeweils zwei Haltebolzen 24, die jeweils mit einer der beiden Führungsplatten 22 verschieblich verbunden sind, ein Führungsbügel 25 angeordnet, so dass jeder Führungsbügel 25 die zwei Führungsplatten 22 eines Segments 4 miteinander verbindet. Der Kappenkanal 2 wird somit zu einer Seite durch die beiden parallelen Führungsplatten 22, zur gegenüberliegenden Seite durch die jeweils an einer Führungsplatte 22 mittels eines Haltebolzens 24 festgelegten, parallel übereinander angeordneten Führungsbügeln 25 und zu den übrigen beiden Seiten in Umfangsrichtung des Kappenkanals 2 durch die Haltebolzen 24 gebildet (siehe Fig. 6a, d).

Weiterhin ist an jedem Haltebolzen 24 jeweils eine das Segment 4 mit dem angrenzenden Segment 4 verbindende längliche Halteöse 20 angeordnet, die die angrenzenden Segmente 4 verschieblich zueinander führt. Die obere Auflagefläche 9 wird zugleich von einer Oberkante der Führungsplatten 22, einer Oberkante der Halteösen 20 und einer Oberkante der Führungsbügel 25 gebildet, die im zusammengeschobenen Zustand des Kappenkanals 2 mit einer Unterkante der Führungsplatten 22, einer Unterkante der unteren der beiden Haltebolzen 24 an einem Segment 4 und einer Unterkante der Führungsbügel 25 in Kontakt stehen und somit die untere Auflagefläche 10 bilden (siehe Fig. 6b, c).

Im ausgezogenen Zustand des Kappenkanals 2 sind die einzelnen Segmente lediglich durch die jeweils an den Haltebolzen 24 zweier Segmente 4 angeordneten Halteösen 20 verbunden. Je nach Zuordnung der Halteösen 20 zu einem der Segmente 4 können diese als unteres oder oberes Verbindungselement 5 ,6 angesehen werden, während das andere der Verbindungselemente 6, 5 durch den mit der jeweiligen Halteöse 20 zusammenwirkenden Haltebolzen 24 gebildet wird. Entsprechend befinden sich die obere und die untere Kontaktfläche 7, 8 an dem Haltebolzen 24 und an der Halteöse 20 (siehe Fig. 6a, d).

### Bezugszeichenliste

- 1: teleskopierbare Kappenzuführung
- 2: Kappenkanal
- 3: längenverstellbarer Abschnitt
- 4: Segment
- 5: oberes Verbindungselement
- 6: unteres Verbindungselement
- 7: obere Kontaktfläche
- 8: untere Kontaktfläche
- 9: obere Auflagefläche
- 10: untere Auflagefläche
- 11: Führungsabschnitt
- 12: Tragstruktur
- 13: Bereich zur Führung
- 14: Nut
- 15: Rastöffnung
- 16: Hakenelement
- 17: Führungsschlitz
- 18: Bolzen
- 19: Bolzenkanal
- 20: Halteöse
- 21: Ring
- 22: Führungsplatte
- 23: Schlitz
- 24: Haltebolzen
- 25: Führungsbügel
- K: Kappe
- B: Bewegungsrichtung der Kappe
- F: Flasche
- V: Verschließer
- S: Sortierer

## Patentansprüche

1. Teleskopierbare Kappenzuführung (1), umfassend
- einen Kappenkanal (2),
- der in zumindest einem Abschnitt (3) zwischen einem ausgezogenen und einem zusammengeschobenen Zustand längenverstellbar ist, wobei
- der Kappenkanal (2) aus mindestens drei Segmenten (4) gebildet ist,
- wobei jedes Segment (4) verschieblich an den angrenzenden Segmenten (4) festgelegt ist, wobei jedes Segment (4) ein oberes Verbindungselement (5) und ein unteres Verbindungselement (6) zur Anordnung an einem angrenzenden Segment (4) aufweist, wobei das obere Verbindungselement (5) eines Segments (4) eine auf das darunterliegende Segment (4) gerichtete obere Kontaktfläche (7) aufweist und das untere Verbindungselement (6) eines Segments (4) eine auf das darüberliegende Segment (4) gerichtete untere Kontaktfläche (8) aufweist, und
jedes Segment (4) einen Führungsabschnitt (11) zur mehrseitigen Führung einer Kappe (K) im Kappenkanal (2) aufweist, wobei der Kappenkanal (2) aus den Führungsabschnitten (11) gebildet ist, wobei das obere Verbindungselement (5) oder der Führungsabschnitt (11) eines Segments (4) eine auf das darüber liegende Segment (4) gerichtete obere Auflagefläche (9) aufweist und das untere Verbindungselement (6) oder der Führungsabschnitt (11) eines Segments (4) eine auf das darunter liegende Segment (4) gerichtete untere Auflagefläche (10) aufweist, und wobei im ausgezogenen Zustand die aufeinander gerichteten Kontaktflächen (7, 8) zweier angrenzender Segmente (4) aneinander anliegen, während im Bereich der Auflageflächen (9, 10) kein Kontakt zwischen den Segmenten (4) besteht.

2. Teleskopierbare Kappenzuführung nach Anspruch 1, **dadurch gekennzeichnet, dass** die Segmente (4) wenigstens im ausgezogenen Zustand aneinander aufgehängt sind und im zusammengeschobenen Zustand aufeinander anliegen.

3. Teleskopierbare Kappenzuführung nach wenigstens einem der vorhergehenden Ansprüche, **dadurch gekennzeichnet, dass** im zusammengeschobenen Zustand die aufeinander gerichteten Auflageflächen (9, 10) zweier angrenzender Segmente (4) aneinander anliegen, während im Bereich der Kontaktflächen (7, 8) kein Kontakt zwischen den Segmenten (4) besteht.

4. Teleskopierbare Kappenzuführung nach wenigstens einem der vorhergehenden Ansprüche, **dadurch gekennzeichnet, dass** alle Segmente (4) eine identische Form aufweisen.

5. Teleskopierbare Kappenzuführung nach wenigstens einem der vorhergehenden Ansprüche, **dadurch gekennzeichnet, dass** die Segmente (4) jeweils einstückig gebildet sind.

6. Teleskopierbare Kappenzuführung nach wenigstens einem der vorhergehenden Ansprüche, **dadurch gekennzeichnet, dass** der Kappenkanal (2) wenigstens im ausgezogenen Zustand in einer Richtung senkrecht zur Bewegungsrichtung (B) der Kappen (K) abschnittsweise offen ist.

7. Teleskopierbare Kappenzuführung nach wenigstens einem der vorhergehenden Ansprüche, **dadurch gekennzeichnet, dass** der Kappenkanal (2) wenigstens im zusammengeschobenen Zustand über den gesamten Umfang und über die gesamte Länge geschlossen ist.

8. Teleskopierbare Kappenzuführung nach wenigstens einem der vorhergehenden Ansprüche, **dadurch gekennzeichnet, dass** die Segmente (4) in jedem Zustand des Kappenkanals (2) derart angeordnet sind, dass jede Kappe (K) im Kappenkanal (2) durchgehend durch wenigstens zwei angrenzende Segmente (4) geführt wird.

9. Teleskopierbare Kappenzuführung nach wenigstens einem der vorhergehenden Ansprüche, **gekennzeichnet durch** eine sich wenigstens entlang des längenverstellbaren Teils des Kappenkanals (2) erstreckende Tragstruktur (12), wobei jedes Segment (4) einen zur Führung an der Tragstruktur (12) geformten Bereich aufweist.

10. Teleskopierbare Kappenzuführung nach wenigstens einem der vorhergehenden Ansprüche, **dadurch gekennzeichnet, dass** der längenverstellbare Abschnitt 3 mindestens mit einer Teillänge Bestandteil einer Kappenreinigung und/oder Kappensterilisierungseinheit ist.

## Claims

1. Telescopic cap supply (1) comprising
- a cap passage (2),
- which in at least one section (3) is length-adjustable between an extended state and a collapsed state, wherein
- the cap passage (2) is formed from at least three segments (4),
- wherein each segment (4) is secured to the adjoining segments (4) in a displaceable manner, wherein each segment (4) comprises an upper connection element (5) and a lower connection element (6) for the attachment to an adjoining segment (4), wherein
the upper connection element (5) of a segment (4) comprises an upper contact surface (7) directed onto the segment (4) beneath it, and the lower connection element (6) of a segment (4) comprises a lower contact surface (8) directed onto the segment (4) above it, and
each segment (4) comprises a guide section (11) for the multi-sided guiding of a cap (K) in the cap passage (2), wherein the cap passage (2) is formed from the guide sections (11), wherein the upper connection element (5) or the guide section (11) of a segment (4) comprises an upper bearing surface (9) directed onto the segment (4) located above it, and the lower connection element (6) or the guide section (11) of a segment (4) comprises a lower bearing surface (10) directed onto the segment (4) located beneath it, and wherein, in the extended state, the contact surfaces (7, 8) directed onto one another of two adjoining segments (4) are in contact with one another, while in the region of the bearing surfaces (9, 10) no contact pertains between the segments (4).

2. Telescopic cap passage according to claim 1, **characterised in that**, at least in the extended state, the segments (4) are suspended from one another, and in the collapsed state are in contact lying on one another.

3. Telescopic cap passage according to at least one of the preceding claims, **characterised in that**, in the collapsed state, the bearing surfaces (9, 10) directed onto one another of two adjoining segments (4) lie on one another, while in the region of the contact surfaces (7, 8) no contact pertains between the segments (4).

4. Telescopic cap passage according to at least one of the preceding claims, **characterised in that** all the segments (4) exhibit an identical form,

5. Telescopic cap passage according to at least one of the preceding claims, **characterised in that** the segments (4) are in each case formed as being of one piece.

6. Telescopic cap passage according to at least one of the preceding claims, **characterised in that** the cap passage (2), at least in the extended state, is open section by section in a direction perpendicular to the direction of movement (B) of the caps (K).

7. Telescopic cap passage according to at least one of the preceding claims, **characterised in that** the cap passage (2), at least in the collapsed state, is closed over the entire circumference and the entire length.

8. Telescopic cap passage according to at least one of the preceding claims, **characterised in that** the segments (4), in every state of the cap passage (2), are arranged in such a way that each cap (K) in the cap passage (2) is guided continuously through at least two adjoining segments (4).

9. Telescopic cap passage according to at least one of the preceding claims, **characterised by** a carrying structure (12), extending at least along the length-adjustable part of the cap passage (2), wherein each segment (4) comprises a region which is shaped to provide guiding at the carrying structure (12).

10. Telescopic cap passage according to at least one of the preceding claims, **characterised in that** the length-adjustable section 3 is, at least with a part length, a constituent part of a cap cleaning element and/or cap sterilising unit.

## Revendications

1. Alimentation en capsules télescopique (1) comprenant
- un canal de capsule (2),
- qui est réglable en longueur dans au moins une section (3) entre un état extrait et un état regroupé, dans laquelle
- le canal de capsule (2) est formé d'au moins trois segments (4),
- dans laquelle chaque segment (4) est fixé de manière mobile aux segments (4) contigus, dans laquelle chaque segment (4) présente un élément de liaison supérieur (5) et un élément de liaison inférieur (6) pour l'agencement au niveau d'un segment (4) contigu, dans laquelle
l'élément de liaison supérieur (5) d'un segment (4) présente une surface de contact (7) supérieure dirigée vers le segment (4) se trouvant dessous et l'élément de liaison inférieur (6) d'un segment (4) présente une surface de contact (8) inférieure dirigée vers le segment (4) se trouvant dessus, et
chaque segment (4) présente une section de guidage (11) pour le guidage multidirectionnel d'une capsule (K) dans le canal de capsule (2), dans laquelle le canal de capsule (2) est formé à partir des sections de guidage (11), dans laquelle l'élément de liaison supérieur (5) ou la section de guidage (11) d'un segment (4) présente une surface d'appui (9) supérieure dirigée vers le segment (4) se trouvant dessus et l'élément de liaison inférieur (6) ou la section de guidage (11) d'un segment (4) présente une surface d'appui (10) inférieure dirigée vers le segment (4) se trouvant dessous, et dans laquelle à l'état extrait, les surfaces de contact (7, 8) dirigées l'une vers l'autre de deux segments (4) contigus reposent l'une contre l'autre, alors que dans la zone des surfaces d'appui (9, 10) aucun contact entre les segments (4) n'existe.

2. Alimentation en capsules télescopique selon la revendication 1, **caractérisée en ce que** les segments (4) sont accrochés au moins dans l'état extrait l'un à l'autre et reposent l'un contre l'autre dans l'état regroupé.

3. Alimentation en capsules télescopique selon au moins l'une des revendications précédentes, **caractérisée en ce que** dans l'état regroupé les surfaces d'appui (9, 10) dirigées l'une vers l'autre de deux segments (4) contigus reposent l'une contre l'autre, alors que dans la zone des surfaces de contact (7, 8) aucun contact entre les segments (4) n'existe.

4. Alimentation en capsules télescopique selon au moins l'une des revendications précédentes, **caractérisée en ce que** tous les segments (4) présentent une forme identique.

5. Alimentation en capsules télescopique selon au moins l'une des revendications précédentes, **caractérisée en ce que** les segments (4) sont formés respectivement d'un seul tenant.

6. Alimentation en capsules télescopique selon au moins l'une des revendications précédentes, **caractérisée en ce que** le canal de capsule (2) est ouvert par section au moins dans l'état extrait dans un sens perpendiculaire au sens de déplacement (B) des capsules (K).

7. Alimentation en capsules télescopique selon au moins l'une des revendications précédentes, **caractérisée en ce que** le canal de capsule (2) est fermé au moins dans l'état regroupé sur la périphérie entière et sur la longueur entière.

8. Alimentation en capsules télescopique selon au moins l'une des revendications précédentes, **caractérisée en ce que** les segments (4) sont agencés dans chaque état du canal de capsule (2) de telle manière que chaque capsule (K) soit guidée dans le canal de capsule (2) en continu par au moins deux segments (4) contigus.

9. Alimentation en capsules télescopique selon au moins l'une des revendications précédentes, **caractérisé par** une structure porteuse (12) s'étendant au moins le long de la partie réglable en longueur du canal de capsule (2), dans laquelle chaque segment (4) présente une zone formée pour le guidage au niveau de la structure porteuse (12).

10. Alimentation en capsules télescopique selon au moins l'une des revendications précédentes, **caractérisé en ce que** la section (3) réglable en longueur au moins avec une longueur partielle fait partie d'un nettoyage de capsule et/ou unité de stérilisation de capsule.
